# EUROPÄISCHE PATENTSCHRIFT

(11) **EP 3 853 560 B1**
(45) Veröffentlichungstag und Bekanntmachung des Hinweises auf die Patenterteilung: **01.03.2023**
(21) Anmeldenummer: 19779378.9
(22) Anmeldetag: 13.09.2019
(51) Int. Cl.: G01D 11/30, G01J 5/04, G01S 7/521, B60R 11/04, G10K 11/00, G01D 11/24

(54) **SENSORMODUL MIT EINEM UM EINE ACHSE DREHBAREN SENSORTRÄGER SOWIE VERFAHREN ZUM ZUSAMMENSETZEN EINES DERARTIGEN SENSORMODULS**
SENSOR MODULE HAVING A SENSOR CARRIER ROTATABLE ABOUT AN AXIS, AND METHOD FOR ASSEMBLING A SENSOR MODULE OF THIS TYPE
MODULE DE CAPTEUR COMPRENANT UN SUPPORT DE CAPTEUR ROTATIF AUTOUR D'UN AXE AINSI QUE PROCÉDÉ POUR L'ASSEMBLAGE D'UN TEL MODULE DE CAPTEUR

(30) Priorität: 18.09.2018 DE 102018122868
(43) Veröffentlichungstag der Anmeldung: 28.07.2021
(73) Patentinhaber: ZF CV Systems Europe BV, 1170 Brussels (BE)
(72) Erfinder: KORTLANG, Tobias, 30989 Gehrden (DE)
(74) Vertreter: Rabe, Dirk-Heinrich
(86) Internationale Anmeldenummer: PCT/EP2019/074438
(87) Internationale Veröffentlichungsnummer: WO 2020/058100

(56) Entgegenhaltungen:
- EP-A1- 2 555 012
- DE-A1-102012 204 267
- DE-U1- 9 112 255

## Beschreibung

### Technisches Gebiet

Die vorliegende Erfindung bezieht sich auf ein Sensormodul. Insbesondere bezieht sich die vorliegende Erfindung auf ein Sensormodul mit einem einstellbaren Sensorsichtfeld. Weiterhin betrifft die vorliegende Erfindung ein Verfahren zum Zusammensetzen eines derartigen Sensormoduls.

### Stand der Technik

Da aus dem Stand der Technik bekannte Sensormodule ein Einstellen des Sensorsichtfelds oftmals nur in engen Grenzen ermöglichen, werden für unterschiedliche Einbauszenarien typischerweise eigens für das jeweilige Einbauszenario entworfene Sensormodule verwendet.

### Darstellung der Erfindung

Die vorliegende Offenbarung bereichert den Stand der Technik, als erfindungsgemäße Sensormodule leicht an unterschiedliche Einbauszenarien angepasst werden können, da die Ausrichtung des Sensorsichtfelds relativ zum Gehäuse über einen weiten Bereich (bspw. mehr als 90° mehr als 120° oder mehr als 180° einstellbar ist).

Ein erfindungsgemäßes Sensormodul ist in Anspruch 1 definiert.

Aus der DE 10 2012 204267 A1 ist eine Sensorhalterung für einen Sensor zur Objektdetektion bekannt, mit einer Montageeinheit (14) für den Sensor (12) und mit einem Halterahmen (18), an dem die Montageeinheit (14) schwenkbar gehalten ist, und mit einer an dem Halterahmen (18) gelagerten Justierwelle (22), die eine schraubenartig um die Justierwelle (22) verlaufende Führungskontur (24) hat, die in Eingriff mit einem Führungselement (26) der Montageeinheit (14) steht. Ebenfalls ist darin ein an der Montageeinheit (14) angeordneter Sensor (12) zur Objektdetektion, insbesondere ein Radarsensor gezeigt.

Aus der EP 2 555 012 A1 ist ein Abtastradar für ein Kraftfahrzeug bekannt, zum Senden und Empfangen von Radarwellen, der mit einer veränderbaren Ausrichtung bezüglich einer Halterung an dieser befestigt ist, und zumindest einen Aktuator aufweist, der zwischen zwei oder drei Positionen verstellbar ist.

Dabei ist unter dem Begriff "Sensormodul", wie er in der Beschreibung und den Ansprüchen verwendet wird, insbesondere eine Einrichtung zu verstehen, die aus einer Einwirkung der Umgebung auf den Sensor Daten ableitet und diese an einem Ausgang des Sensormoduls (bspw. über eine Busschnittstelle) ausgibt. Des Weiteren ist unter dem Begriff "Sensorträger", wie er in der Beschreibung und den Ansprüchen verwendet wird, insbesondere ein Bauteil zu verstehen, an dem im Betrieb der Messaufnehmer (bspw. ein Bildsensor) befestigt ist.

Ferner ist unter dem Begriff "Aufnahme", wie er in der Beschreibung und den Ansprüchen verwendet wird, insbesondere eine Aussparung zu verstehen, in die der Sensorträger (radial zur Achse) formschlüssig eingreift. Zudem ist unter dem Begriff "Gehäuse", wie er in der Beschreibung und den Ansprüchen verwendet wird, insbesondere eine aus zwei Schalen gebildete (Hohl-) Struktur zu verstehen, in die bspw. eine Leiterplatte und elektrische/elektronische Bauteile eingebettet sind. Die Schalen können aus Kunststoff, oder aus Metall (Magnesium, Alu, usw.) bestehen, und insbesondere als Kühlkörper oder zum Abschirmen elektromagnetischer Strahlung ausgebildet sein.

Vorzugsweise weist der Sensorträger eine zylinderförmige Kontur auf.

Dadurch bietet das Gehäuse für den Sensorträger bzw. einen nicht wesentlich über den Sensorträger (in radialer Richtung) hinausragenden Sensor beim Einbau Schutz vor Berührung (bzw. Kollision) mit ebenen Bauteilen, die breiter als die Öffnung der Aufnahme sind.

Vorzugsweise ist vorgesehen, dass zwischen dem Gehäuse und dem Mantelflächenbereich des Sensorträgers
- im nicht-zusammengesetzten Zustand des Sensormoduls keine kraft- oder formschlüssigen Verbindung ausgebildet ist zum Ermöglichen einer Einstellung der Winkellage relativ zum Gehäuse, und
- im zusammengesetzten Zustand des Sensormoduls eine kraft- oder formschlüssigen Verbindung ausgebildet ist zum Fixieren der eingestellten Winkellage relativ zum Gehäuse. Damit kann die Winkellage beim Montieren noch eingestellt und durch den Montagevorgang in einfacher Weise fixiert und damit für den Betrieb dauerhaft festgelegt werden.

Erfindungsgemäß weist das Gehäuse einen quaderförmigen zwei- oder mehrteiligen Hohlkörper mit einer in drei Seiten des quaderförmigen Hohlkörpers gebildeten zusammenhängenden Öffnung auf, durch die ein zwischen den Enden des Sensorträgers liegender Bereich des Sensorträgers freigelegt ist. Dadurch kann die Messrichtung (bzw. die Sensorsichtfeldachse) durch Drehen des Sensorträges bspw. in Richtung einer Oberseite, einer Vorderseite und einer Unterseite des Gehäuses ausgerichtet werden.

Der den Mantelflächenbereich zur Erzeugung der kraft- oder formschlüssigen Verbindung zum Gehäuse aufweisende zylinderförmige Abschnitt des Sensorträgers wird erfindungsgemäß durch den freigelegten Bereich in axialer Richtung begrenzt.

Vorzugsweise ist der Mantelflächenbereich zur Erzeugung der formschlüssigen Verbindung zum Gehäuse mit einer Riffelung versehen.

Gemäß einer vorteilhaften Ausführung ist vorgesehen, dass mindestens eine an dem Gehäuse angeordnete Rastnase zumindest im zusammengesetzten Zustand des Gehäuses und/oder des Sensormoduls in die Riffelung auf dem Mantelflächenbereich des Sensorträgers einrastet, wobei eine Verstellung der mindestens einen Rastnase in radialer Richtung gegenüber der Riffelung verhinderbar ist zum Erzeugen der formschlüssigen Verbindung zum Gehäuse und damit zum Verhindern einer Verdrehung des Sensorträgers gegenüber dem Gehäuse. Da das Gehäuse in diesem Zustand zusammengesetzt ist, wird die Verdrehung gegenüber beiden Gehäuseseiten des Gehäuses verhindert. Dadurch kann in einfacher Weise erreicht werden, dass die Winkellage des Sensorträgers und damit der Sensoren fixiert wird und daher nachfolgend nicht mehr verändert werden kann. Die Winkellage kann dabei vorab vorgegeben werden. Durch ein Verhindern des Abhebens der Rastnase von der Riffelung nach Einstellung der vorgegebenen Winkellage kann auch im Betrieb des Sensormoduls im Fahrzeug sichergestellt werden, dass die Winkellage beispielsweise bei Vibrationen beibehalten wird.

Vorzugsweise ist weiterhin vorgesehen, dass die mindestens eine Rastnase an mindestens einem federnd nachgiebigen Schenkel am Gehäuse angeordnet ist, wobei der mindestens eine Schenkel derartig in radialer Richtung bezüglich des Sensorträgers beweglich ist, dass die mindestens eine Rastnase zumindest im zusammengesetzten Zustand des Gehäuses und/oder des Sensormoduls gegen die Riffelung drückt und dadurch zumindest teilweise in die Riffelung einrastet.

Durch die federnde bzw. elastische Nachgiebigkeit kann das Einrasten der Rastnase situativ erfolgen. Beispielsweise kann der Sensorträger vor dem Zusammensetzen des Sensormoduls noch verdreht werden, um die Winkellage einzustellen. Dies wird dadurch ermöglicht, dass eine in die Riffelung eingerastete Rastnase auch noch entgegen der Federkraft des Schenkels von der Riffelung abgehoben werden kann und damit beim Verdrehen des Sensorträgers auf der Riffelung quasi nach Art einer Ratschenverbindung entlanggleitet. Im zusammengesetzten Zustand des Sensormoduls hingegen kann ein Abheben der Rastnasen verhindert werden, so dass die Rastnase in die Riffelung einrastet, wodurch ein Verdrehen des Sensorträgers verhindert wird.

Dies kann vorzugsweise dadurch erfolgen, dass ein erster Andrückbereich im zusammengesetzten Zustand des Gehäuses und/oder des Sensormoduls derartig mit dem mindestens einen Schenkel in Wirkverbindung gebracht ist, dass eine Verstellung der in die Riffelung eingerasteten Rastnase in radialer Richtung gegenüber der Riffelung verhindert ist zum Erzeugen der formschlüssigen Verbindung zum Gehäuse und damit zum Verhindern einer Verdrehung des Sensorträgers gegenüber dem Gehäuse aus der eingestellten Winkellage.

Der erste Andrückbereich sorgt also dafür, dass der nachgiebige Schenkel in seiner Bewegung eingeschränkt ist, wodurch die Rastnasen im eingerasteten Zustand in der Riffelung gehalten werden. Dadurch wird das Ausbilden einer formschlüssigen Verbindung in dieser Situation, d.h. im zusammengesetzten Zustand, in einfacher Weise bewirkt.

Vorzugsweise ist außerdem vorgesehen, dass die mindestens eine Rastnase im nicht-zusammengesetzten Zustand des Gehäuses und/oder des Sensormoduls
- in die Riffelung auf dem Mantelflächenbereich des Sensorträgers zumindest teilweise einrastet und eine Verstellung der Rastnase in radialer Richtung gegenüber der Riffelung möglich ist oder
- nicht in die Riffelung auf dem Mantelflächenbereich des Sensorträgers einrastet,
zum Ermöglichen einer Verdrehung des Sensorträgers gegenüber dem Gehäuse zum Einstellen der Winkellage relativ zum Gehäuse.

Der erste Andrückbereich oder ein anderer Mechanismus sorgen also erst im zusammengesetzten Zustand bzw. nach der Montage für eine formschlüssige Verbindung, wodurch vorher bzw. während der Montage eine Einstellung der Winkellage des Sensorträgers noch möglich ist. Dabei kann es nach dem Einsetzen des Sensorträgers und vor dem Zusammensetzen des Gehäuses bereits dazu kommen, dass die Rastnasen an der Riffelung anliegen bzw. darin einrasten und der Schenkel bei einer Verdrehung des Sensorträgers in die gewünschte Winkellage elastisch nachgibt, während die Rastnasen über die Riffelung gemäß einer Ratschenverbindung gleiten. Dadurch wird eine schwergängige Bewegung des Sensorträgers erreicht, wodurch ein eigenständiges Verdrehen des Sensorträgers verhindert wird. Der Sensorträger kann dadurch vor der endgültigen Fixierung bzw. Montage also nur durch einen erhöhten Kraftaufwand aus der eingestellten Winkellage bewegt werden, was insbesondere das Zusammensetzen der Gehäuseseiten bzw. des Sensormoduls vereinfacht. Dies muss aber nicht zwangsläufig der Fall sein, d.h. der Sensorträger kann im nicht-zusammengesetzten Zustand auch ohne Einrasten der Rastnase in die Riffelung frei beweglich in seine Winkellage gegenüber dem Gehäuse gebracht werden.

Vorzugsweise ist weiterhin vorgesehen, dass der erste Andrückbereich an einem der Gehäuseseiten des Gehäuses angeordnet ist, wobei der erste Andrückbereich im zusammengesetzten Zustand des Gehäuses derartig an dem Schenkel anliegt, dass eine radiale Verstellung der in die Riffelung eingerasten Rastnase gegenüber der Riffelung verhindert ist. Damit kann das Ausbilden der formschlüssigen Verbindung automatisch erfolgen, wenn das Gehäuse zusammengesetzt wird und der erste Andrückbereich durch das Zusammensetzen gegen den Schenkel gelangt. Daher sind keine zusätzlichen Montageschritte nötig, um die Winkellage durch die formschlüssige Verbindung zu fixieren.

Bevorzugt ist weiterhin vorgesehen, dass die beiden Gehäuseseiten des Gehäuses im zusammengesetzten Zustand durch eine Schraub- oder Niet- oder Klemmverbindung zusammengehalten werden zum Sichern der formschlüssigen Verbindung.

Vorzugsweise ist der Sensor eingerichtet, elektromagnetische Strahlung zu erfassen.

Bspw. kann der Sensor als Bild-, Radar- oder Lidarsensor ausgebildet sein.

Der Sensorträger kann zur Aufnahme zweier identischer Sensoren eingerichtet sein. Bspw. kann ein zweiter Bild-, Radar- oder Lidarsensor vorgesehen sein, der redundante Messdaten liefert (und dadurch eine Überprüfung/Validierung der Daten des ersten Sensors ermöglicht) oder Daten für weitere Anwendungen bereitstellt, die den Sensor aktiv steuern (bspw. hinsichtlich einer "region of interest", der Samplefrequenz, etc.).

Der Sensorträger kann zur Aufnahme von zwei, drei oder vier unterschiedlichen Sensoren eingerichtet sein. Bspw. kann ein zweiter Sensor (z. B. ein Bild-, Radar- oder Lidarsensor) vorgesehen sein, der redundante und/oder komplementäre Messdaten liefert (und dadurch eine Überprüfung/ Validierung der Daten des ersten Sensors ermöglicht oder die Daten des ersten Sensors ergänzt) oder Daten für weitere Anwendungen bereitstellt, die Daten benötigen, die der erste Sensor nicht (oder nicht in der nötigen Güte/Genauigkeit) liefern kann. Insbesondere kann eine Tageslichtkamera, eine IR-Kamera, ein Entfernungsmesser vorgesehen sein. Zudem können auch zwei Kameras vorgesehen sein, wobei eine Kamera ein Videosignal liefert, das direkt verarbeitet wird, und die andere Kamera ein Videosignal liefert, das aufgezeichnet wird (bspw. Kamera 1: Verkehrsschilderkennung, Personenerfassung, Spurverfolgung; Kamera 2. Videosignal).

Ferner kann der Sensorträger zur Aufnahme einer Einrichtung zum Abstrahlen elektromagnetischer Strahlung (Radarwellen, Laser, Infrarotlicht, etc.) eingerichtet sein.

Vorzugsweise umfasst das Sensormodul ferner eine Schaltung, die eingerichtet ist, Messsignale des Sensors zu empfangen und aus den Messsignalen erzeugte Messdaten unter Berücksichtigung eines Übertragungsprotokolls an einen Empfänger zu übertragen.

Bspw. kann die Schaltung eingerichtet sein, die Daten auf Nachrichtenblöcke aufzuteilen und die Datenblöcke an einen vorgegebenen Empfänger zu adressieren. Zudem kann die Schaltung aus den Messignalen Informationen extrahieren und als Daten weiterleiten. Bspw. kann das Sensormodul zur Verarbeitung und/oder Ausgabe von Umfelddaten eingerichtet sein. D. h., das Sensormodul kann eingerichtet sein, aus den Messignalen Objekte/Hindernisse im Umfeld des Sensors zu detektieren und Daten über die detektierten Objekte an einen Empfänger zu übertragen.

Bspw. kann die Schaltung Daten ausgeben, die ein Verlassen der Fahrspur oder die Anwesenheit von Personen auf einer Straße anzeigen. Die Verarbeitung kann dabei bspw. auf einer Hauptleiterplatte im Gehäuse erfolgen. Auch besteht die Möglichkeit an eine im Sensorträger angeordnete Kamera weitere Sensoren anzuschließen z.B. "Satelliten"-Kameras in den Außenspiegeln oder Hinten, deren Signale in der Schaltung verarbeitet werden.

Vorzugsweise ist der Sensor als Radar-, Infrarot-, oder Bildsensor ausgebildet.

Das Sensormodul kann im Inneren (bspw. hinter einer Windschutzscheibe, im Dachhimmel, im Armaturenbrett) eines Fahrzeugs verbaut sein. Bspw. kann die Achse des Sensorträgers in horizontaler Richtung ausgerichtet ist, so dass mittels einer Drehung des Sensorträges der Winkel des Sensors zur Horizontalen bzw. die Neigung der "Sensor-Blickrichtung" zur Fahrspur eingestellt werden kann.

Das Sensormodul kann jedoch auch hinter einer Seitenscheibe des Fahrzeugs oder in einem Seitenspiegel verbaut sein. Die Achse kann zudem (im Wesentlichen) in vertikaler Richtung ausgerichtet sein, um das Blickfeld bspw. auf einen Bereich im toten Winkel des Fahrzeugs auszurichten.

Vorzugsweise ist die Winkellage in einem Bereich von 150°-200°, besonders vorzugsweise 180° einstellbar.

Bspw. kann bei einem Einstellwinkel von bis zu 180° über eine virtuelle Drehung des Bildes in der Software jeder Winkel am Fahrzeug dargestellt werden (360°).

Zudem sei angemerkt, dass alle Merkmale und Vorzüge (bevorzugter Ausführungsformen) eines erfindungsgemäßen Sensormoduls auch Merkmale und Vorzüge (bevorzugter Ausführungsformen) eines erfindungsgemäßen Verfahrens sein können, welches sich auf eine (mögliche) Verwendung erfindungsgemäßer Sensormodule bezieht.

Erfindungsgemäß ist weiterhin ein Verfahren zum Zusammensetzen eines erfindungsgemäßen Sensormoduls vorgesehen, mit mindestens den folgenden Schritten:
- Bereitstellen der Gehäuseseiten des Gehäuses und des Sensorträgers;
- Platzieren des Sensorträgers in einer der Gehäuseseiten;
- Verdrehen des platzierten Sensorträgers um die Drehachse zum Einstellen einer Winkellage;
- Zusammensetzen und Verbinden der beiden Gehäuseseiten zum Ausbilden des Gehäuses, wobei zumindest nach dem Zusammensetzen und Verbinden der Gehäuseseiten eine kraft- oder formschlüssige Verbindung zwischen dem Gehäuse und dem Mantelflächenbereich des Sensorträgers erzeugt wird, um den Sensorträger in der eingestellten Winkellage relativ zum Gehäuse zu fixieren.

Erfindungsgemäß ist dabei vorgesehen, dass zum Erzeugen der formschlüssigen Verbindung zum Gehäuse mindestens eine Rastnase an einer der Gehäuseseiten in eine Riffelung auf dem Mantelflächenbereich des Sensorträgers einrastet, wobei ein erster Andrückbereich bei dem oder zumindest nach dem Zusammensetzen der Gehäuseseiten derartig mit der mindestens einen Rastnase in Wirkverbindung gebracht wird, dass eine radiale Verstellung der in die Riffelung eingerasteten Rastnase gegenüber der Riffelung verhindert wird zum Fixieren der eingestellten Winkellage des Sensorträgers relativ zum Gehäuse. Dadurch wird vorteilhafterweise eine automatisierte Ausbildung der formschlüssigen Verbindung erfolgen, sobald die Gehäuseseiten zusammengesetzt sind. Dies kann durch eine Schraub- oder Niet- oder Klemmverbindung weiter gesichert werden.

Dabei ist vorzugsweise vorgesehen, dass die mindestens eine Rastnase nach dem Platzieren des Sensorträgers und vor dem Zusammensetzen und Verbinden der beiden Gehäuseseiten
- in die Riffelung auf dem Mantelflächenbereich des Sensorträgers zumindest teilweise einrastet und eine Verstellung der Rastnase in radialer Richtung gegenüber der Riffelung möglich ist, oder
- nicht in die Riffelung auf dem Mantelflächenbereich des Sensorträgers einrastet,
zum Einstellen der Winkellage des Sensorträgers gegenüber dem Gehäuse. Kurze Beschreibung der Zeichnungen

Die Erfindung wird nachfolgend in der detaillierten Beschreibung anhand von Ausführungsbeispielen erläutert, wobei auf Zeichnungsfiguren Bezug genommen wird, in denen:
Fig. 1 eine perspektivische Ansicht von Elementen eines erfindungsgemäßen Sensormoduls zeigt;
Fig. 2 eine perspektivische Ansicht der in Fig. 1 gezeigten Elemente teilweise im zusammengesetzten Zustand zeigt;
Fig. 2a eine Schnittansicht des in Fig. 2 gezeigten Sensorträgers zeigt;
Fig. 2b, 2c eine Schnittansicht durch das zusammengesetzte Sensormodul zeigen;
Fig. 3 eine Drehung des Sensorträgers relativ zum Gehäuse illustriert;
Fig. 3a und Fig. 3b weitere Elemente des Sensormoduls zeigen;
Fig. 4 bis Fig. 10 den Einbau des Sensormoduls in einem Fahrzeug zeigen;
Fig. 11 eine Verbindung zwischen einem Radarsensor und einer im Sensormodul angeordneten Schaltung zeigt;
Fig. 12 eine Verbindung zwischen einem Infrarotsensor und einer im Sensormodul angeordneten Schaltung zeigt; und
Fig. 13 Umfelddaten illustriert.

Dabei sind in den Zeichnungsfiguren gleiche und funktional ähnliche Elemente durch gleiche Bezugszeichen gekennzeichnet. Jedoch versteht es sich, dass nicht notwendigerweise alle Elemente in allen Zeichnungsfiguren gezeigt sind und dass die gezeigten Elemente lediglich dazu gedacht sind, Aspekte der Erfindung zu verdeutlichen.

### Wege zur Ausführung der Erfindung

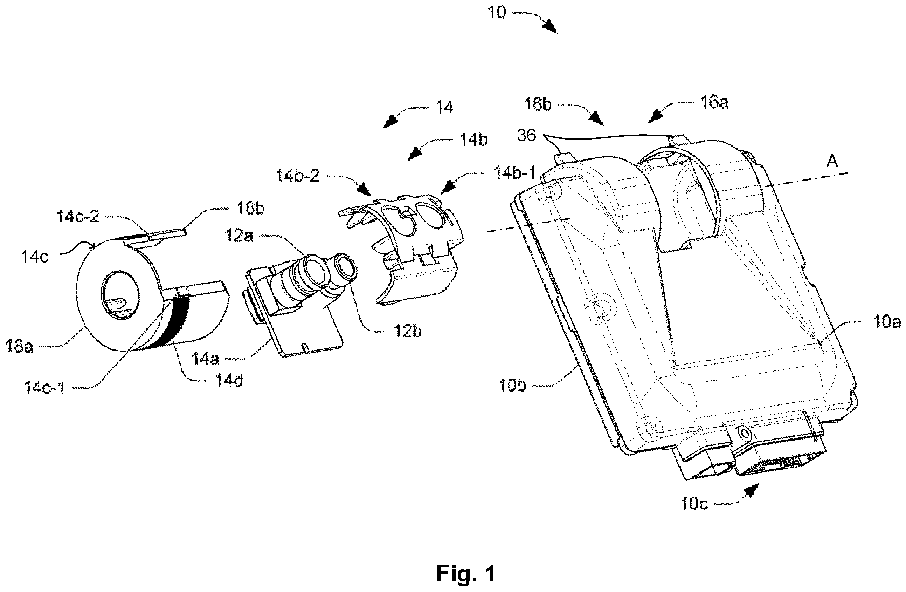

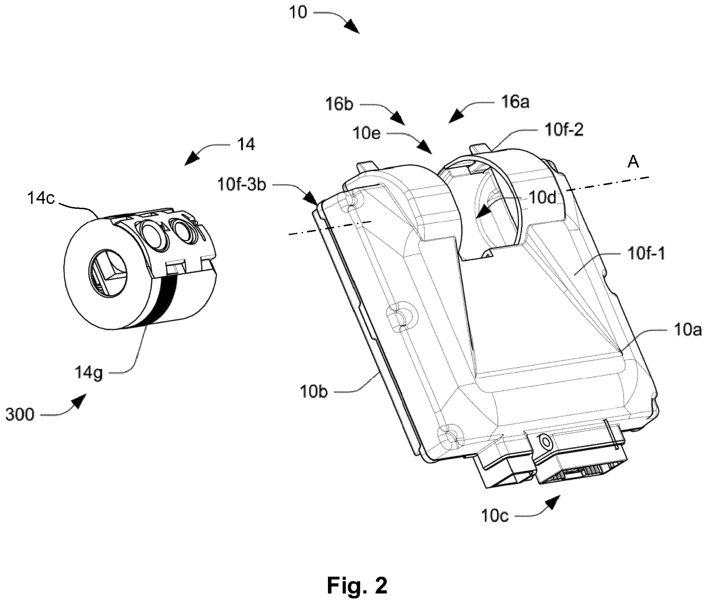

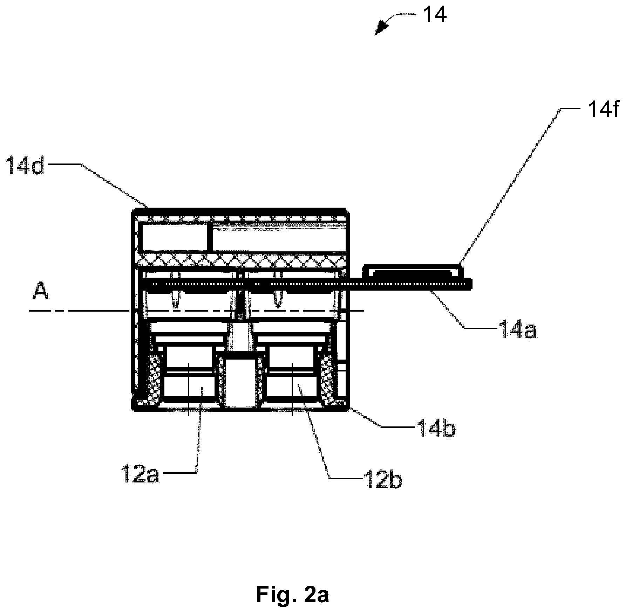

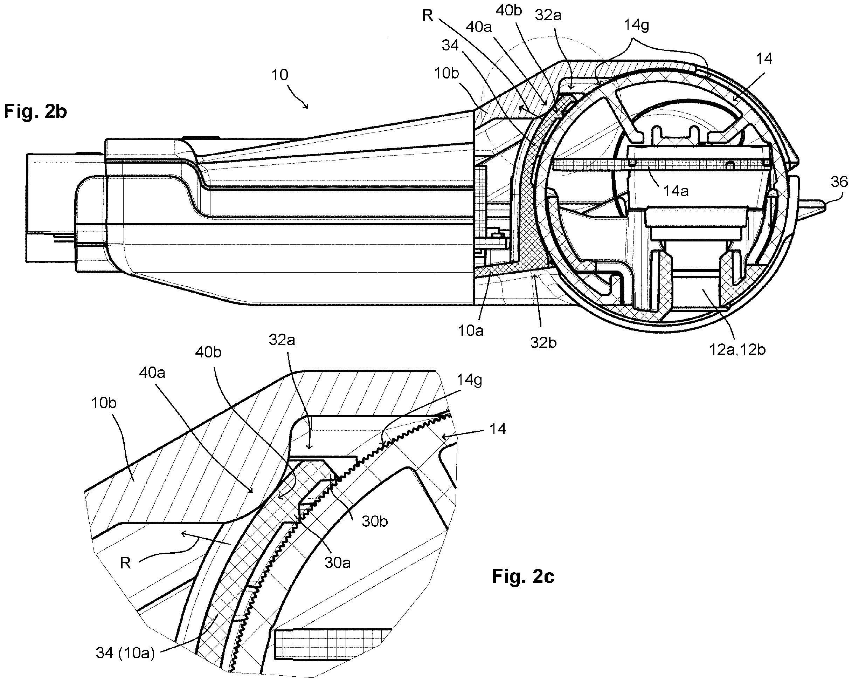

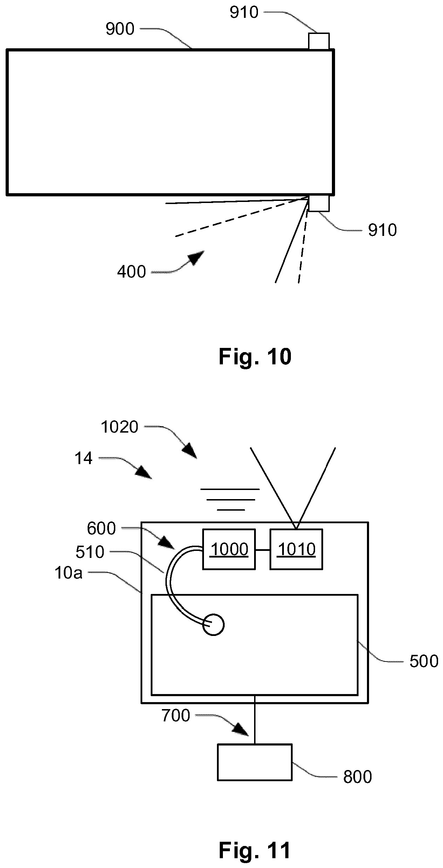

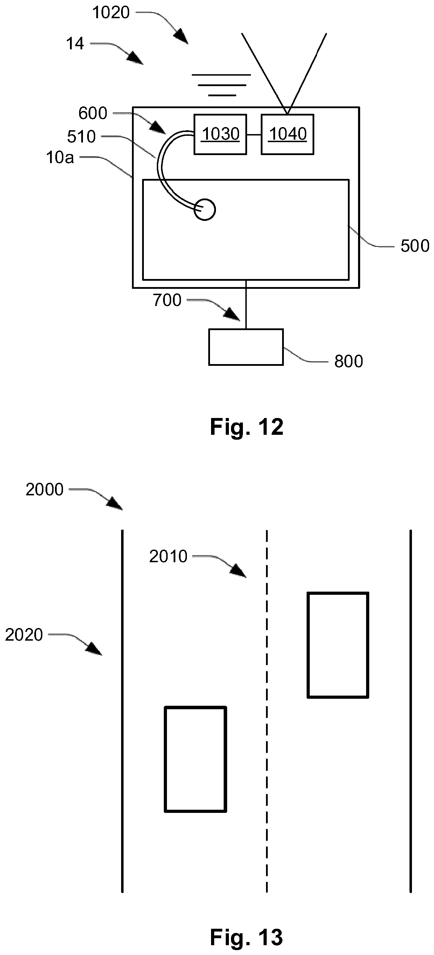

Fig. 1 und Fig. 2 zeigen perspektive Ansichten eines Gehäuse 10 und eines mit zwei Sensoren (insbesondere mit zwei Bildsensoren bzw. Kameras) 12a, 12b versehenen Sensorträgers 14 (in Fig. 2 im zusammengebauten Zustand). Die Sensoren 12a, 12b sind einzeln am Sensorträger 14 montiert, so dass der Sensorträger 14 auch mit nur einem Sensor 12a (bspw. einer Kamera), einem Sensor 12a eines ersten Sensortyps (bspw. einer Kamera) und einem Sensor 12b eines zweiten Sensortyps (bspw. einem Radarsensor 1010, einem Infrarotsensor 1040 (siehe Fig. 11 und Fig. 12), einem Lidarsensor oder irgendeiner anderen Sensorkombination versehen sein kann. Da der Sensorträger 14 mit den für das jeweilige Messszenario benötigten Sensoren 12a, 12b, 1010, 1040 bestückt werden kann, kann das Sensormodul 10 in unterschiedlichen Messszenarien eingesetzt werden.

Das Gehäuse 10 bildet einen Hohlkörper 10d und weist zwei koaxiale zylinderförmige Aufnahmen 16a, 16b auf, in denen die zylinderförmige Enden 18a, 18b des Sensorträgers 14 um eine Achse A gleitend drehbar gelagert werden können. Zwischen den koaxialen zylinderförmigen Aufnahmen 16a, 16b weist das Gehäuse 10 eine Aussparung 10e auf, die sich von der Oberseite 10f-1 über die Stirnseite 10f-2 bis zur Unterseite 10f-3 des Gehäuses 10 erstreckt und vorgesehen ist, den Mittelteil 14e des Sensorträgers 14, der die Sensoren 12a, 12b umfasst, im eingebauten Zustand freizulegen.

Zwischen dem Gehäuse 10 und dem Mantelflächenbereich 14d, der (aus radialer Richtung gesehen) auf dem Abschnitt angeordnet ist, der freigelegt ist, kann beim Zusammenbau des Sensormoduls 20 eine kraft- oder formschlüssige Verbindung 100a, 100b erzeugt werden (bspw. durch Vorsehen einer Riffelung 14g). Dadurch kann der Sensorträger 14 in einer einstellbaren Winkellage 200 relativ zum Gehäuse 10 fixiert und das Sensorsichtfeld an unterschiedliche Messszenarien (bspw. Nahfeld, Fernfeld, etc.) bzw. Fahrzeugtypen unterschiedlicher Geometrie (Höhe, Windschutzscheibenwinkel, etc.) angepasst werden, was es ermöglicht, unterschiedliche Verwendungen (bzw. Kundenvorgaben) zu realisieren. Bspw. kann das Gehäuse 10 so ausgeführt sein, dass der Sensorträger 14 beim Verschrauben der Gehäuseschalen 10a, 10b geklemmt wird. Zudem kann eine Einrichtung vorgesehen sein, die es erlaubt, den Sensorträger 14 nach dem Zusammenbau des Gehäuses 10 zu klemmen.

Der Sensorträger 14 umfasst eine Basisplatte 14a, an der die Sensoren 12a, 12b befestigt sind. Bspw. kann die Basisplatte 14a zwei Öffnungen aufweisen, durch die sich die Sensoren 12a, 12b erstrecken, wobei ein (sich auf einer Seite der Öffnung befindlicher) Teil der Sensoren 12a, 12b einen Anschlag und der (sich auf der anderen Seite der Öffnung befindliche) verbleibende Teil der Sensoren 12a, 12b ein Gewinde aufweist, auf das ein Gehäuseteil der Sensoren 12a, 12b geschraubt ist, wodurch die Sensoren 12a, 12b an der Basisplatte 14a befestigt sind. Die Basisplatte 14a kann als Leiterplatte ausgebildet sein, auf der zusätzliche Komponenten verklebt und verschraubt sind. Insbesondere können, wie in Fig. 2a gezeigt, die Bauteile der Sensorelektronik in einer Art "Sandwich"-Aufbau mit der Leiterplatte verschraubt sein. Auf der Leiterplatte kann zudem eine Steckverbindung 14f für ein Kabel zu einer Schaltung 500 (auf einer Hauptplatine im Gehäuse 10) vorgesehen sein.

Ferner kann die Basisplatte 14a Aussparungen und/oder Vorsprünge aufweisen, die beim Zusammensetzen des Sensorträgers 14 die Basisplatte 14a relativ zu anderen Elementen führen. Zudem kann die Basisplatte 14a (abweichend von dem in Fig. 1 Gezeigten) so gestaltet sein, dass die beiden Sensoren 12a, 12b relativ zueinander um die Achse A verdreht werden können, indem bspw. die Basisplatte 14a in zwei Elemente unterteilt ist, die aneinander gleitend gelagert sind.

Im weiteren Zusammenbau wird eine Abdeckung 14b (in radialer Richtung) auf die Basisplatte 14a aufgeschoben. Die Abdeckung 14b weist zwei Aussparungen 14b-1, 14b-2 auf, durch die sich im zusammengesetzten Zustand die Sensoren (bspw. die Objektive der Kameras 12a, 12b) erstrecken. Die mit der Abdeckung 14b versehene Basisplatte 14a kann dann, wie in Fig. 2 gezeigt, in axialer Richtung in eine zylinderförmige Hülse 14c geschoben und mit dieser mittels zweier Nasen 14c-1, 14c-2, die an einem Rand eines Zylindermantelausschnitts der Hülse 14c vorgesehenen sind und im zusammengesetzten Zustand in Aussparungen 14b-3, 14b-4 der Abdeckung 14b eingreifen, verrastet werden. Der freiliegende Teil der Abdeckung 14b weist eine zylindermantelförmige Kontur auf, der die zylindermantelförmige Kontur der Hülse 14c zu einem zylinderförmigen Sensorträger 14 (bzw. einem Sensorträger 14 mit einer zylinderförmigen Kontur 300) ergänzt.

Der fertig zusammengesetzte zylinderförmige Sensorträger 14 kann dann in das Gehäuse 10 eingebracht werden, indem der Sensorträger 14 in einer Gehäuseseite 10a, 10b platziert, die Sensorelektronik an die in dem Gehäuse 10 angeordnete Schaltung 500 (auf der Hauptplatine) angeschlossen, die Winkellage 200 der Sensoren 12a, 12b eingestellt und die Gehäuseseiten 10a, 10b miteinander verschraubt (oder anderweitig miteinander verbunden werden) werden. Die Schaltung 500 (auf der Hauptplatine) kann dann mittels einer an einer Gehäuseöffnung vorgesehenen Schnittstelle 10c mit Energie versorgt werden und/oder Daten empfangen/senden.

Die Einstellung der Winkellage 200 der Sensoren 12a, 12b relativ zum Gehäuse 10 erfolgt dabei folgendermaßen:
Wie in der Schnittansicht in den Fig. 2b und 2c dargestellt, ist vorgesehen, dass auf dem Mantelflächenbereich 14d des Sensorträgers 14, der (aus radialer Richtung R gesehen) auf dem Abschnitt angeordnet ist, der im montierten bzw. zusammengesetzten Zustand des Sensormoduls 20 freigelegt ist, die Riffelung 14g angeordnet ist. Die Riffelung 14g verläuft dabei vorzugsweise durchgängig zwischen den beiden Nasen 14c-1, 14c-2, die an dem Rand des Zylindermantelausschnitts der Hülse 14c angeordnet sind (s. Fig. 1). In die Riffelung 14g können im zusammengesetzten Zustand des Sensormoduls 20 bzw. des Gehäuses 10 ein oder mehrere Rastnasen 30a, 30b eingreifen bzw. einrasten (s. Fig. 2c).

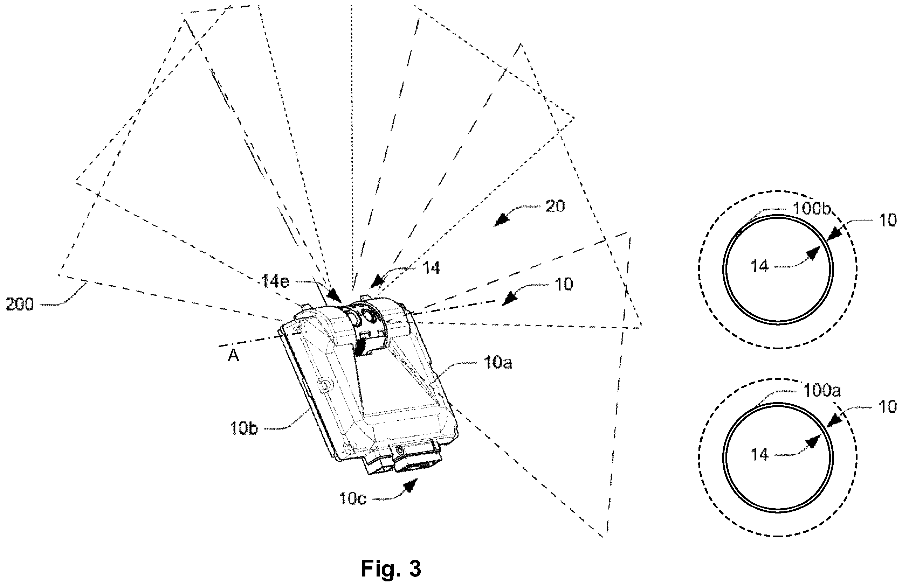

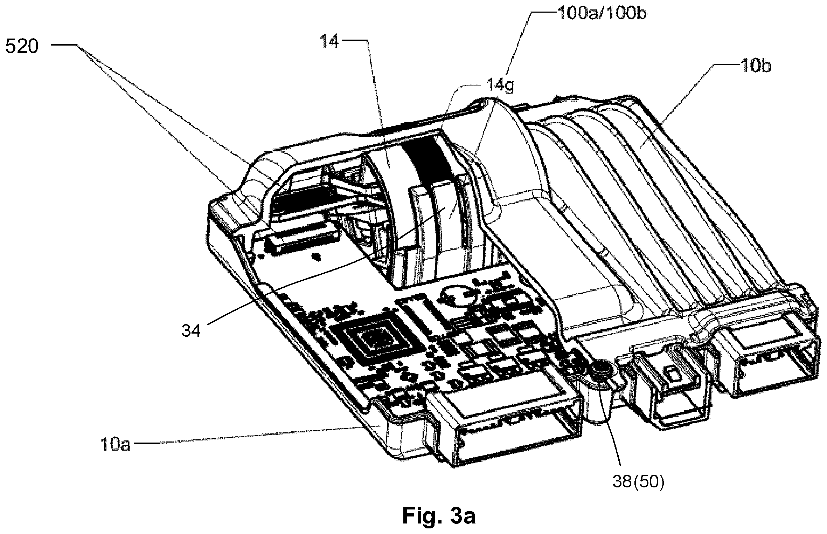

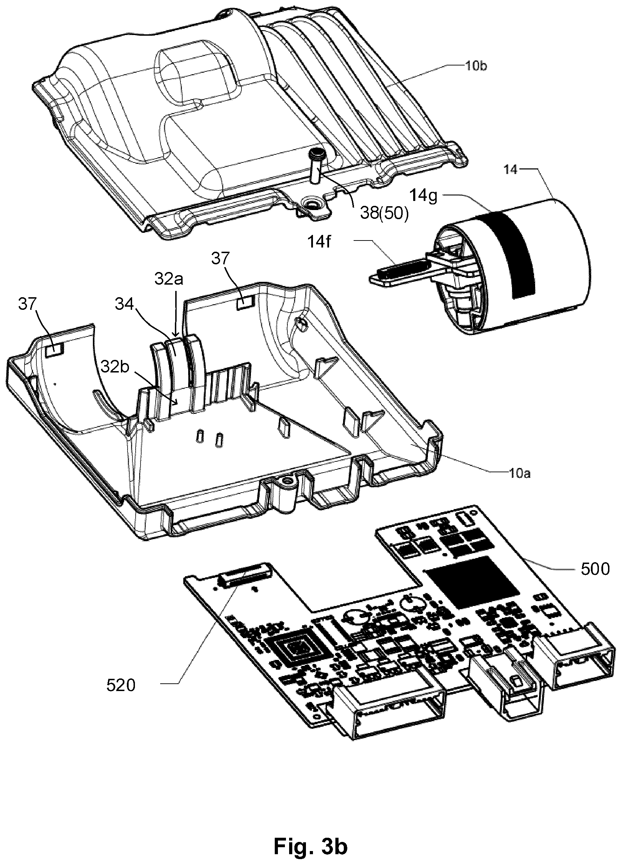

Die Rastnasen 30a, 30b sind an einem ersten Endbereich 32a eines Schenkels 34 angeordnet, der in radialer Richtung R bezüglich des Sensorträgers 14 federnd nachgiebig ist. Der Schenkel 34 verläuft dabei in dieser Ausführungsvariante parallel zu der zylinderförmigen Kontur 300 des Sensorträgers 14, berührt den Sensorträger 14 dabei aber nicht bzw. lediglich mit den Rastnasen 30a, 30b. Grundsätzlich ist aber auch ein anderer Verlauf des Schenkels 34 möglich, der ein Einrasten der Rastnasen 30a, 30b in die Riffelung 14g ermöglicht. Zur Ausbildung der radialen Nachgiebigkeit ist der Schenkel 34 beispielsweise aus Kunstsoff gefertigt und mit einem zweiten Endbereich 32b an einer Gehäuseoberseite 10a des Gehäuses 10 befestigt (s. Fig. 2b, 3a, 3b).

Nach dem Platzieren des Sensorträgers 14 in einer der Gehäuseseiten 10a, 10b, beispielsweise in der Gehäuseoberseite 10a, wird der Sensorträger 14 in die gewünschte Winkellage 200 verstellt, indem dieser im platzierten Zustand um die Drehachse A verdreht wird. Dabei kann es bereits dazu kommen, dass die Rastnasen 30a, 30b an der Riffelung 14g anliegen bzw. darin einrasten und der Schenkel 34 bei einer Verdrehung des Sensorträgers 14 in die gewünschte Winkellage 200 elastisch nachgibt, während die Rastnasen 30a, 30b über die Riffelung 14g nach Art einer Ratschenverbindung gleiten. Dadurch wird eine schwergängige Bewegung des Sensorträgers 14 erreicht, wodurch ein eigenständiges Verdrehen des Sensorträgers 14 verhindert wird. Der Sensorträger 14 kann dadurch vor der endgültigen Fixierung also nur durch einen erhöhten Kraftaufwand aus der eingestellten Winkellage 200 bewegt werden, was insbesondere das Zusammensetzen der Gehäuseseiten 10a, 10b vereinfacht. Es kann jedoch auch vorgesehen sein, dass die Rastnasen 30a, 30b nach dem Platzieren noch nicht an der Riffelung 14g anliegen bzw. darin einrasten, so dass der platzierte Sensorträger 14 frei um die Drehachse A verdreht werden kann.

Zur endgültigen Fixierung der eingestellten Winkellage 200 wird anschließend eine Gehäuseunterseite 10b des Gehäuses 10 auf die Gehäuseoberseite 10a aufgesetzt. Dazu werden zunächst zwei Einstecknasen 36 (s. Fig. 2b) an der Gehäuseunterseite 10b in zwei Öffnungen 37 (s. Fig. 3b) an der Gehäuseoberseite 10a eingesteckt. Anschließend werden die beiden Gehäuseseiten 10a, 10b über eine Schraube 38 (s. Fig. 3a, 3b) miteinander verschraubt und dadurch sicher und dauerhaft zusammengehalten.

Durch das Zusammensetzen der Gehäuseseiten 10a, 10b sowie das Einbringen der Schraube 38 wird ein erster Andrückbereich 40a an der Gehäuseunterseite 10b fest gegen einen zweiten Andrückbereich 40b am Schenkel 34 gedrückt, wodurch die Rastnasen 30a, 30b in der Riffelung 14g im eingerasteten Zustand gehalten werden (s. Fig. 2c). Dadurch wird eine formschlüssige Verbindung 100b ausgebildet. Durch den ersten Andrückbereich 40a wird nämlich im zusammengesetzten und verschraubten Zustand ein radiales Abheben der Rastnasen 30a, 30b von der Riffelung 14g verhindert. Ein Verdrehen des Sensorträgers 14 um die Drehachse A ist also gegenüber dem unverschraubten Zustand, in dem zumindest eine schwergängige Bewegung noch gewährleistet ist, nicht mehr möglich. Der Sensorträger 14 ist also nach dem Zusammensetzen und Verschrauben der Gehäuseseiten 10a, 10b in seiner Winkellage 200 automatisch gesichert.

Dadurch kann ein Verstellen des Sensorträgers 14 und damit der Sensoren 12a, 12b im Betrieb vermieden werden, da die formschlüssige Verbindung 100b auch bei Vibrationen oder bei sonstigen äußeren Einwirkungen dafür sorgt, dass die Winkellage 200 beibehalten wird. Durch das Ausbilden der formschlüssigen Verbindung 100b erst nach der Montage des Gehäuses 10 kann eine Winkellage 200 je nach Einbauszenario und Wunsch vorab eingestellt werden, wobei die Winkellage 200 auch nach einer optionalen Demontage des Gehäuses 10 immer wieder verändert werden könnte. Vorzugsweise ist jedoch vorgesehen, dass eine gewünschte Winkellage 200 im Betrieb immer beibehalten wird.

Wie in Fig. 3 illustriert, kann durch das Drehen des Sensorträgers 14 das Sensormodul 20 an unterschiedliche Einbauszenarien angepasst werden. Bspw. kann durch die Aussparung 10e, die sich von der Oberseite 10f-1 über die Stirnseite 10f-2 bis zur Unterseite 10f-3 des Gehäuses 10 erstreckt, das Sichtfeld der Sensoren 12a, 12b um 180° um die Achse A geschwenkt werden. Fig. 3a zeigt dazu das Gehäuse 10 in teilweise aufgeschnittenem Zustand, in dem die Hauptplatine und die auf der Hauptplatine vorgesehenen Steckplätze bzw. Stecker 520 zur Verbindung mit den Sensoren 12a, 12b sichtbar sind, die bspw. mittels eines flexiblen Kabels mit der in Fig. 3b gezeigten Steckverbindung 14f der Leiterplatte des Sensorträgers 14 verbunden werden können.

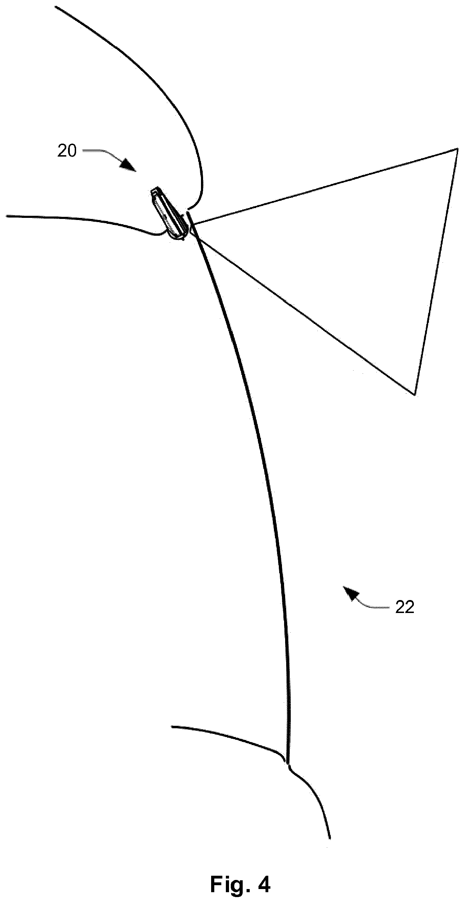

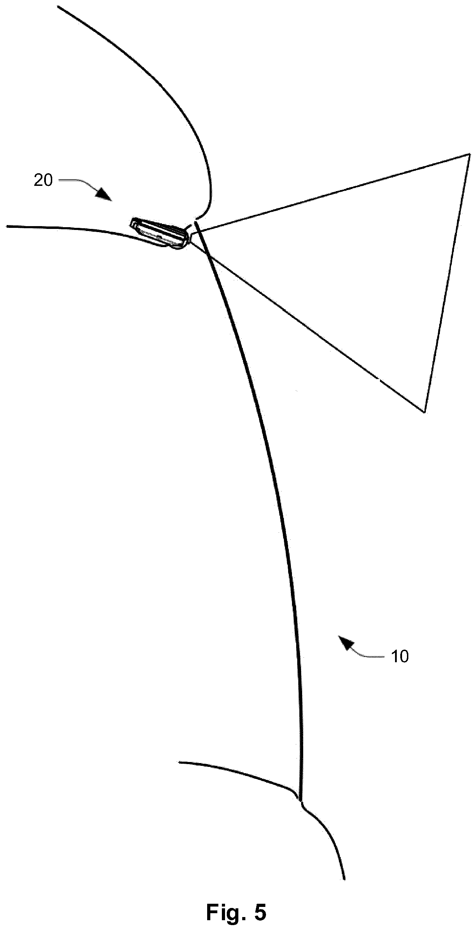

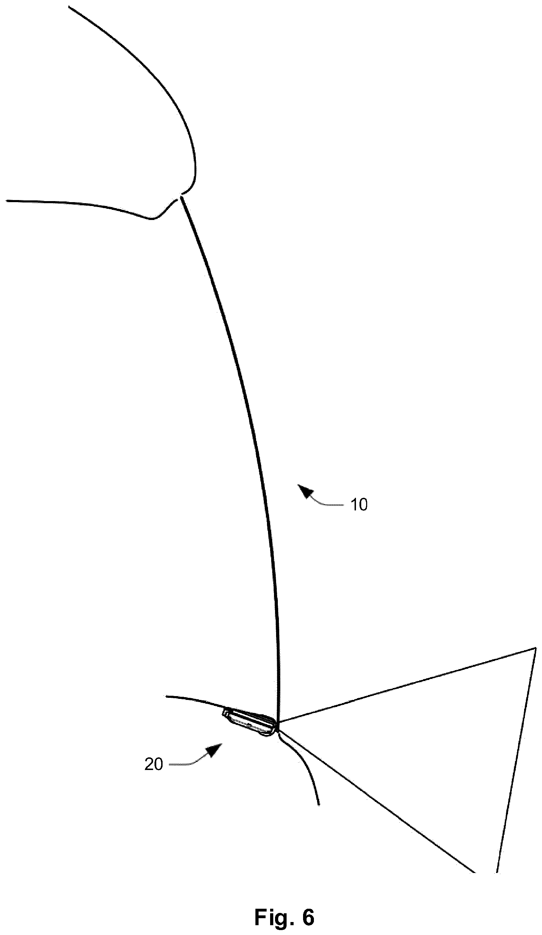

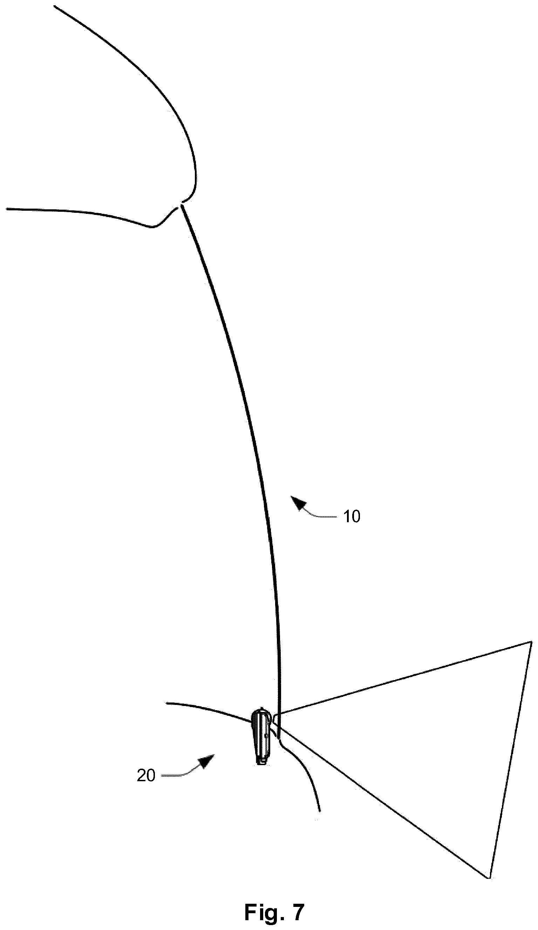

Wie in Fig. 4 und Fig. 5 gezeigt, kann das Sensormodul 20 im oberen Bereich einer Windschutzscheibe 22 eines Fahrzeugs 900 (bspw. im Dach eines Lastkraftwagens) angeordnet sein, wobei, (je nach Platzbedarf) die Gehäuselängsachse sowohl im Wesentlichen vertikal als im Wesentlichen horizontal ausgerichtet sein kann. Zudem kann, wie in Fig. 6 und Fig. 7 gezeigt, das Sensormodul 20 im unteren Bereich einer Windschutzscheibe 22 eines Fahrzeugs 900 (bspw. in der Handschuhablage eines Lastkraftwagens) angeordnet sein, wobei, (je nach Platzbedarf) die Gehäuselängsachse sowohl im Wesentlichen horizontal als auch im Wesentlichen vertikal ausgerichtet sein kann.

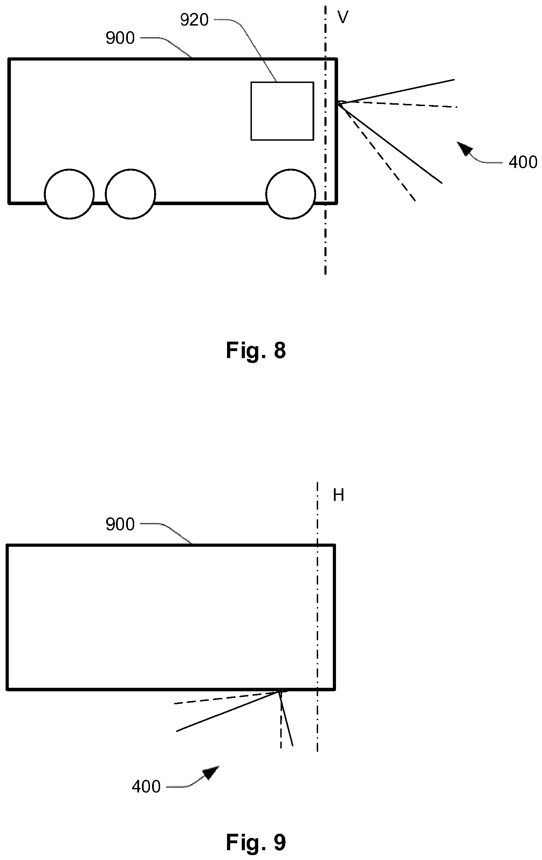

Wenn die Achse A im Wesentlichen in horizontaler Richtung H ausgerichtet ist, kann durch Drehen des Sensorträgers 14 relativ zum Gehäuse 10 der Erfassungsbereich (weitgehend) unabhängig von der Einbaulage eingestellt werden. Wie in Fig. 8 gezeigt, kann das Sensormodul 900 dadurch dazu verwendet werden, (in Fahrtrichtung) vor dem Fahrzeug 900 in unterschiedlichen Entfernungsbereichen befindliche Strukturen durch Erfassen von an den Strukturen reflektierter elektromagnetischer Strahlung 400 zu detektieren.

Ferner kann, wie in Fig. 9 und Fig. 10 gezeigt, das Sensormodul 900 hinter einer Seitenscheibe 920 oder in einem Seitenspiegelgehäuse 910 des Fahrzeugs 900 angeordnet sein und durch Erfassen elektromagnetischer Strahlung 400 Strukturen (seitlich) neben dem Fahrzeug 900 erfassen. Auch hier kann der Erfassungsbereich (weitgehend) unabhängig von der Einbaulage des Sensormoduls 20 gewählt werden, wenn die Achse A im Wesentlichen in vertikaler Richtung V ausgerichtet ist.

Fig. 11 und Fig. 12 zeigen schematisch die Kontaktierung zwischen dem Sensorträger 14 (bzw. den Sensoren 12a, 12b, die in Fig. 11 als Radarsensor 1000, 1010 und in Fig. 12 als Infrarotsensor 1030, 1040 ausgebildet sind und elektromagnetische Strahlung 1020 in Form von Radarstrahlung bzw. Infrarotstrahlung aussenden) und einer Schaltung 500, mittels derer Messsignale 600 an die Schaltung 500 übertragen werden können. Dabei überbrückt eine flexible Kabelverbindung 510 (bspw. eine Flexfolie) den Einstellbereich. Während des Zusammenbaus wird der Sensorträger 14 in die Gehäuseoberseite 10a eingelegt und über Kabel/Flex mit der Schaltung 500 vebunden. Der Sensorträger 14 wird dann auf den Fahrzeugwinkel eingestellt und die Gehäuseunterseite 10b wird zugeklappt. Das Gehäuse 10 kann dann verschraubt werden, wodurch die Ausrichtung des Sensorträgers 14 relativ zum Gehäuse 10 fixiert wird. Während des Betriebs kann die Schaltung 500 aus den Messsignalen 600 Messdaten 700 erzeugen. Die Messdaten 700 können bspw. Umfelddaten 2000 sein (oder aus Umfelddaten 2000 abgeleitete Steuerdaten), die an einen Empfänger 800 übertragen werden, welcher eine Fahrerassistenzfunktion ausführt.

Wie in Fig. 13 gezeigt, können die Umfelddaten 2000 bspw. eine Fahrbahnmarkierung 2010 und die Position, Geschwindigkeit, Beschleunigung, etc. von Fahrzeugen 2020 im Umfeld des Fahrzeugs 900 sein.

### Bezugszeichenliste (Teil der Beschreibung)

- A: Achse
- H: Horizontale
- R: radiale Richtung
- V: Vertikale
- 10: Gehäuse
- 10a: Gehäuseoberseite
- 10b: Gehäuseunterseite
- 10c: Schnittstelle (elektrisch)
- 10d: Hohlkörper
- 10e: Öffnung/Aussparung
- 10f-1: Seite
- 10f-2: Seite
- 10f-3: Seite
- 12a: Sensor (Bildsensor/Kamera)
- 12b: Sensor (Bildsensor/Kamera)
- 14: Sensorträger
- 14a: Basisplatte (Leiterplatte)
- 14b: Abdeckung
- 14b-1: Aussparung
- 14b-2: Aussparung
- 14c: Hülse
- 14c-1: Nase
- 14c-2: Nase
- 14d: Mantelflächenbereich
- 14e: Bereich (Mittelteil)
- 14f: Steckverbindung (für Kabel zur Hauptplatine)
- 14g: Riffelung
- 16a: Aufnahme
- 16b: Aufnahme
- 18a: zylinderförmiges Ende (Sensorträger)
- 18b: zylinderförmiges Ende (Sensorträger)
- 20: Sensormodul
- 22: Windschutzscheibe
- 30a, 30b: Rastnase
- 32a: erster Endbereich
- 32b: zweiter Endbereich
- 34: Schenkel
- 36: Einstecknase
- 37: Öffnung
- 38: Schraube
- 40a: erster Andrückbereich
- 40b: zweiter Andrückbereich
- 50: Verbindung
- 100a: kraftschlüssige Verbindung
- 100b: formschlüssige Verbindung
- 200: Winkellage
- 300: Kontur (zylinderförmig)
- 400: elektromagnetische Strahlung
- 500: Schaltung
- 510: Kabelverbindung
- 520: Stecker
- 600: Messsignale
- 700: Messdaten
- 800: Empfänger
- 900: Fahrzeug
- 910: Seitenspiegelgehäuse
- 920: Seitenscheibe
- 1000: Emitter (Radarstrahlung)
- 1010: Sensor
- 1020: elektromagnetische Strahlung
- 1030: Emitter (Infrarotstrahlung)
- 1040: Sensor
- 2000: Umfelddaten
- 2010: Fahrbahnmarkierung
- 2020: Fahrzeuge

## Patentansprüche

1. Sensormodul (20), umfassend:
einen Sensorträger (14) eingerichtet zur Aufnahme eines Sensors (12a, 12b); und
ein Gehäuse (10); wobei
das Gehäuse (10) zwei koaxiale zylinderförmige Aufnahmen (16a, 16b) aufweist, in denen zylinderförmige Enden (18a, 18b) des Sensorträgers (14) um eine Achse (A) drehbar gelagert sind, wobei das Sensormodul (20) eingerichtet ist, durch Erzeugung einer kraft- oder formschlüssigen Verbindung (100a, 100b) zwischen dem Gehäuse (10) und einem Mantelflächenbereich (14d) des Sensorträgers (14) den Sensorträger (14) in einer einstellbaren Winkellage (200) relativ zum Gehäuse (10) zu fixieren, und wobei das Gehäuse (10) einen quaderförmigen zwei- oder mehrteiligen Hohlkörper (10d) mit einer in drei Seiten (10f-1, 10f-2, 10f-3) des quaderförmigen Hohlkörpers (10d) gebildeten zusammenhängenden Öffnung (10e) aufweist, durch die ein zwischen den Enden (18a, 18b) des Sensorträgers (14) liegender Bereich (14e) des Sensorträgers (14) freigelegt ist, wobei der freigelegte Bereich (14e) einen zylinderförmigen Abschnitt des Sensorträgers (14), der den Mantelflächenbereich (14d) zur Erzeugung der kraft- oder formschlüssigen Verbindung (100a, 100b) zum Gehäuse (10) aufweist, in axialer Richtung (A) begrenzt.

2. Sensormodul (20) nach Anspruch 1, wobei der Sensorträger (14) eine zylinderförmige Kontur (300) aufweist.

3. Sensormodul (20) nach Anspruch 1 oder 2, **dadurch gekennzeichnet, dass** zwischen dem Gehäuse (10) und dem Mantelflächenbereich (14d) des Sensorträgers (14)
- im nicht-zusammengesetzten Zustand des Sensormoduls (20) keine kraft- oder formschlüssigen Verbindung (100a, 100b) ausgebildet ist zum Ermöglichen einer Einstellung der Winkellage (200) relativ zum Gehäuse (10), und
- im zusammengesetzten Zustand des Sensormoduls (20) eine kraft- oder formschlüssigen Verbindung (100a, 100b) ausgebildet ist zum Fixieren der eingestellten Winkellage (200) relativ zum Gehäuse (10).

4. Sensormodul (20) nach einem der vorhergehenden Ansprüche, wobei der Mantelflächenbereich (14d) zur Erzeugung der formschlüssigen Verbindung (100b) zum Gehäuse (10) mit einer Riffelung (14g) versehen ist.

5. Sensormodul (20) nach Anspruch 4, wobei mindestens eine an dem Gehäuse (10) angeordnete Rastnase (30a, 30b), insbesondere mindestens eine an einer der Gehäuseseiten (10a, 10b) angeordnete Rastnase (30a, 30b), zumindest im zusammengesetzten Zustand des Gehäuses (10) und/oder des Sensormoduls (20) in die Riffelung (14g) auf dem Mantelflächenbereich (14d) des Sensorträgers (14) einrastet, wobei eine Verstellung der mindestens einen Rastnase (30a, 30b) gegenüber der Riffelung (14g) verhinderbar ist zum Erzeugen der formschlüssigen Verbindung (100b) zum Gehäuse (10) und damit zum Verhindern einer Verdrehung des Sensorträgers (14) gegenüber dem Gehäuse (10).

6. Sensormodul (20) nach Anspruch 5, wobei die mindestens eine Rastnase (30a, 30b) an mindestens einem federnd nachgiebigen Schenkel (34) am Gehäuse (10) angeordnet ist, wobei der mindestens eine Schenkel (34) derartig in radialer Richtung (R) bezüglich des Sensorträgers (14) beweglich ist, dass die mindestens eine Rastnase (30a, 30b) zumindest im zusammengesetzten Zustand des Gehäuses (10) und/oder des Sensormoduls (20) gegen die Riffelung (14g) drückt und dadurch zumindest teilweise in die Riffelung (14g) einrastet.

7. Sensormodul (20) nach Anspruch 6, wobei ein erster Andrückbereich (40a) im zusammengesetzten Zustand des Gehäuses (10) und/oder des Sensormoduls (20) derartig mit dem mindestens einen Schenkel (34) in Wirkverbindung gebracht ist, dass eine Verstellung der in die Riffelung (14g) eingerasteten Rastnase (30a, 30b) in radialer Richtung (R) gegenüber der Riffelung (14g) verhindert ist zum Erzeugen der formschlüssigen Verbindung (100b) zum Gehäuse (10) und damit zum Verhindern einer Verdrehung des Sensorträgers (14) gegenüber dem Gehäuse (10) aus der eingestellten Winkellage (200).

8. Sensormodul (20) nach einem der Ansprüche 5 bis 7, wobei die mindestens eine Rastnase (30a, 30b) im nicht-zusammengesetzten Zustand des Gehäuses (10) und/oder des Sensormoduls (20)
- in die Riffelung (14g) auf dem Mantelflächenbereich (14d) des Sensorträgers (14) zumindest teilweise einrastet und eine Verstellung der Rastnase (30a, 30b) in radialer Richtung (R) gegenüber der Riffelung (14g) möglich ist oder
- nicht in die Riffelung (14g) auf dem Mantelflächenbereich (14d) des Sensorträgers (14) einrastet, zum Ermöglichen einer Verdrehung des Sensorträgers (14) gegenüber dem Gehäuse (10) zum Einstellen der Winkellage (200) relativ zum Gehäuse (10).

9. Sensormodul (20) nach Anspruch 7 oder 8, wobei der erste Andrückbereich (40a) an einer der Gehäuseseiten (10a, 10b) des Gehäuses (10) angeordnet ist, wobei der erste Andrückbereich (40a) im zusammengesetzten Zustand des Gehäuses (10) derartig an dem Schenkel (34) anliegt, dass eine Verstellung der in die Riffelung (14g) eingerasteten Rastnase (30a, 30b) in radialer Richtung (R) gegenüber der Riffelung (14g) verhindert ist.

10. Sensormodul (20) nach Anspruch 9, wobei die beiden Gehäuseseiten (10a, 10b) des Gehäuses (10) im zusammengesetzten Zustand durch eine Schraub- oder Niet- oder Klemmverbindung (50) zusammengehalten werden zum Fixieren der formschlüssigen Verbindung (100b).

11. Sensormodul (20) nach einem der vorhergehenden Ansprüche, ferner umfassend:
den Sensor (12a, 12b), wobei der Sensor (12a, 12b) eingerichtet ist, elektromagnetische Strahlung (400) zu erfassen.

12. Sensormodul (20) nach einem der Ansprüche vorhergehenden Ansprüche, wobei der Sensorträger (14) zur Aufnahme zweier identischer Sensoren (12a, 12b) oder zur Aufnahme von zwei drei oder vier unterschiedlichen Sensoren (12a, 12b) eingerichtet ist.

13. Sensormodul (20) nach einem der vorhergehenden Ansprüche, wobei der Sensorträger (14) zur Aufnahme einer Einrichtung zum Abstrahlen elektromagnetischer Strahlung (1020) eingerichtet ist.

14. Sensormodul (20) nach einem der vorhergehenden Ansprüche, ferner umfassend:
eine Schaltung (500), wobei die Schaltung (500) eingerichtet ist, Messsignale (600) des Sensors (12a, 12b) zu empfangen und aus den Messsignalen (600) erzeugte Messdaten (700) unter Berücksichtigung eines Übertragungsprotokolls an einen Empfänger (800) zu übertragen.

15. Fahrzeug (900) mit einem Sensormodul (20) nach einem der vorhergehenden Ansprüche, wobei das Sensormodul (20) zur Verarbeitung und/oder Ausgabe von Umfelddaten (2000) eingerichtet ist.

16. Fahrzeug (900) nach Anspruch 15, wobei der Sensor (12a, 12b) als Radar-(1010), Infrarot- (1040), oder Bildsensor (12a, 12b), ausgebildet ist.

17. Fahrzeug (900) nach Anspruch 15 oder 16, wobei das Sensormodul (20) hinter einer Windschutzscheibe (22) des Fahrzeugs (900) verbaut und die Achse (A) in horizontaler Richtung (H) ausgerichtet ist.

18. Fahrzeug (900) nach Anspruch 15 oder 16, wobei das Sensormodul (20) hinter einer Seitenscheibe (920) des Fahrzeugs (900) verbaut und die Achse (A) in vertikaler Richtung (V) ausgerichtet ist.

19. Fahrzeug (900) nach Anspruch 15 oder 16, wobei das Sensormodul (20) in einem Seitenspiegelgehäuse (910) des Fahrzeugs (900) verbaut ist.

20. Fahrzeug (900) nach einem der Ansprüche 15 bis 19, wobei die Winkellage (200) in einem Bereich von 150°-200°, vorzugsweise 180° einstellbar ist.

21. Verfahren zum Zusammensetzen eines Sensormoduls (20) nach einem der vorhergehenden Ansprüche, mit mindestens den folgenden Schritten:
- Bereitstellen der Gehäuseseiten (10a, 10b) des Gehäuses (10) und des Sensorträgers (14);
- Platzieren des Sensorträgers (10a, 10b) in einer der Gehäuseseiten (10a, 10b);
- Verdrehen des platzierten Sensorträgers (14) um die Drehachse (A) zum Einstellen einer Winkellage (200);
- Zusammensetzen und Verbinden der beiden Gehäuseseiten (10a, 10b) zum Ausbilden des Gehäuses (10), wobei zumindest nach dem Zusammensetzen und Verbinden der Gehäuseseiten (10a, 10b) eine kraft- oder formschlüssige Verbindung (100a, 100b) zwischen dem Gehäuse (10) und dem Mantelflächenbereich (14d) des Sensorträgers (14) erzeugt wird, um den Sensorträger (14) in der eingestellten Winkellage (200) relativ zum Gehäuse (10) zu fixieren, **gekennzeichnet durch** die Schritte,
wobei zum Erzeugen der formschlüssigen Verbindung (100b) zum Gehäuse (10) mindestens eine Rastnase (30a, 30b) an einer der Gehäuseseiten (10a, 10b) in eine Riffelung (14g) auf dem Mantelflächenbereich (14d) des Sensorträgers (14) einrastet, wobei ein erster Andrückbereich (40a) bei dem oder zumindest nach dem Zusammensetzen der Gehäuseseiten (10a, 10b) automatisch derartig mit der mindestens einen Rastnase (30a, 30b) in Wirkverbindung gebracht wird, dass eine radiale Verstellung der in die Riffelung (14g) eingerasteten Rastnase (30a, 30b) gegenüber der Riffelung (14g) verhindert wird zum Fixieren der eingestellten Winkellage (200) des Sensorträgers (14) relativ zum Gehäuse (10).

22. Verfahren nach Anspruch 21, wobei die mindestens eine Rastnase (30a, 30b) nach dem Platzieren des Sensorträgers (14) und vor dem Zusammensetzen und Verbinden der beiden Gehäuseseiten (10a, 10b)
- in die Riffelung (14g) auf dem Mantelflächenbereich (14d) des Sensorträgers (14) zumindest teilweise einrastet und eine Verstellung der Rastnase (30a, 30b) in radialer Richtung (R) gegenüber der Riffelung (14g) möglich ist, oder
- nicht in die Riffelung (14g) auf dem Mantelflächenbereich (14d) des Sensorträgers (14) einrastet,
zum Einstellen der Winkellage (200) des Sensorträgers (14) gegenüber dem Gehäuse (10).

## Claims

1. Sensor module (20), comprising:
a sensor carrier (14) which is designed to receive a sensor (12a, 12b); and
a housing (10); wherein
the housing (10) has two coaxial cylindrical receptacles (16a, 16b), in
which cylindrical ends (18a, 18b) of the sensor carrier (14) are rotatably mounted about an axis (A), wherein the sensor module (20) is designed to fix the sensor carrier (14) in an adjustable angular position (200) relative to the housing (10) by generating a frictional or form-fitting connection (100a, 100b) between the housing (10) and a lateral surface region (14d) of the sensor carrier (14), and wherein
the housing (10) has a cuboid, two-part or multi-part hollow body (10d) having a continuous opening (10e) formed in three sides (10f-1, 10f-2, 10f-3) of the cuboid hollow body (10d), through which opening a region (14e) of the sensor carrier (14) between the ends (18a, 18b) of the sensor carrier (14) is exposed, wherein the exposed region (14e) delimits a cylindrical portion of the sensor carrier (14) in the axial direction (A), which cylindrical portion has the lateral surface region (14d) for generating the frictional or form-fitting connection (100a, 100b) with the housing (10).

2. Sensor module (20) according to claim 1, wherein the sensor carrier (14) has a cylindrical contour (300).

3. Sensor module (20) according to either claim 1 or claim 2,
**characterized in that,** between the housing (10) and the lateral surface region (14d) of the sensor carrier (14):
- in the non-assembled state of the sensor module (20), a frictional or form-fitting connection (100a, 100b) is not formed in order to allow the angular position (200) to be adjusted relative to the housing (10), and
- in the assembled state of the sensor module (20), a frictional or form-fitting connection (100a, 100b) is formed in order to fix the adjusted angular position (200) relative to the housing (10).

4. Sensor module (20) according to any of the preceding claims, wherein the lateral surface region (14d) is provided with corrugations (14g) to generate the form-fitting connection (100b) to the housing (10).

5. Sensor module (20) according to claim 4, wherein at least one latching lug (30a, 30b) arranged on the housing (10), in particular at least one latching lug (30a, 30b) arranged on one of the housing sides (10a, 10b), latches into the corrugations (14g) on the lateral surface region (14d) of the sensor carrier (14) at least in the assembled state of the housing (10) and/or of the sensor module (20), wherein an adjustment of the at least one latching lug (30a, 30b) relative to the corrugations (14g) can be prevented to generate the form-fitting connection (100b) with the housing (10) and thus to prevent the sensor carrier (14) from rotating relative to the housing (10).

6. Sensor module (20) according to claim 5, wherein the at least one latching lug (30a, 30b) is arranged on at least one resiliently flexible leg (34) on the housing (10), wherein the at least one leg (34) is movable in the radial direction (R) with respect to the sensor carrier (14) such that the at least one latching lug (30a, 30b) presses against the corrugations (14g) at least in the assembled state of the housing (10) and/or of the sensor module (20) and, as a result, at least partly snaps into the corrugations (14g).

7. Sensor module (20) according to claim 6, wherein a first pressing region (40a) is brought into operative connection with the at least one leg (34) in the assembled state of the housing (10) and/or the sensor module (20) such that an adjustment of the latching lug (30a, 30b) latched into the corrugations (14g) in the radial direction (R) is prevented relative to the corrugations (14g) in order to generate the form-fitting connection (100b) with the housing (10) and thus prevent a rotation of the sensor carrier (14) relative to the housing (10) from the adjusted angular position (200).

8. Sensor module (20) according to any of claims 5 to 7, wherein the at least one latching lug (30a, 30b), in the non-assembled state of the housing (10) and/or the sensor module (20),
- at least partly latches into the corrugations(14g) on the lateral surface region (14d) of the sensor carrier (14) and an adjustment of the latching lug (30a, 30b) in the radial direction (R) relative to the corrugations (14g) is possible, or
- does not latch into the corrugations (14g) on the lateral surface region (14d) of the sensor carrier (14) to allow the sensor carrier (14) to be rotated relative to the housing (10) in order to adjust the angular position (200) relative to the housing (10).

9. Sensor module (20) according to either claim 7 or claim 8, wherein the first pressing region (40a) is arranged on one of the housing sides (10a, 10b) of the housing (10), wherein the first pressing region (40a) abuts the leg (34) in the assembled state of the housing (10) such that an adjustment of the latching lug (30a, 30b) latched in the corrugations (14g) is prevented in the radial direction (R) relative to the corrugations (14g).

10. Sensor module (20) according to claim 9, wherein, in the assembled state, the two housing sides (10a, 10b) of the housing (10) are held together by a screw or rivet or clamp connection (50) in order to fix the form-fitting connection (100b).

11. Sensor module (20) according to any of the preceding claims, further comprising:
the sensor (12a, 12b), wherein the sensor (12a, 12b) is designed to detect electromagnetic radiation (400).

12. Sensor module (20) according to any of the preceding claims, wherein the sensor carrier (14) is designed to receive two identical sensors (12a, 12b) or to receive two, three or four different sensors (12a, 12b).

13. Sensor module (20) according to any of the preceding claims, wherein the sensor carrier (14) is designed to receive a device for emitting electromagnetic radiation (1020).

14. Sensor module (20) according to any of the preceding claims, further comprising:
a circuit (500), wherein the circuit (500) is designed to receive measurement signals (600) of the sensor (12a, 12b) and to transmit measurement data (700) generated from the measurement signals (600) to a receiver (800) while taking into account a transmission protocol.

15. Vehicle (900) comprising a sensor module (20) according to any of the preceding claims, wherein the sensor module (20) is designed to process and/or output environment data (2000).

16. Vehicle (900) according to claim 15, wherein the sensor (12a, 12b) is designed as a Radar sensor (1010), infrared sensor (1040) or image sensor (12a, 12b).

17. Vehicle (900) according to either claim 15 or claim 16, wherein the sensor module (20) is installed behind a windshield (22) of the vehicle (900) and the axis (A) is oriented in the horizontal direction (H).

18. Vehicle (900) according to either claim 15 or claim 16, wherein the sensor module (20) is installed behind a side window (920) of the vehicle (900) and the axis (A) is oriented in the vertical direction (V).

19. Vehicle (900) according to either claim 15 or claim 16, wherein the sensor module (20) is installed in a wing mirror housing (910) of the vehicle (900).

20. Vehicle (900) according to any of claims 15 to 19, wherein the angular position (200) can be adjusted in a range of 150°-200°, preferably 180°.

21. Method for assembling a sensor module (20) according to any of the preceding claims, comprising at least the following steps:
- providing the housing sides (10a, 10b) of the housing (10) and the sensor carrier (14);
- placing the sensor carrier (10a, 10b) in one of the housing sides (10a, 10b);
- rotating the placed sensor carrier (14) about the axis of rotation (A) in order to adjust an angular position (200);
- assembling and connecting the two housing sides (10a, 10b) to form the housing (10), wherein a frictional or form-fitting connection (100a, 100b) between the housing (10) and the lateral surface region (14d) of the sensor carrier (14) is generated at least after the housing sides (10a, 10b) are assembled and connected in order to fix the sensor carrier (14) in the adjusted angular position (200) relative to the housing (10), **characterized by** the steps,
in which, in order to produce the form-fitting connection (100b) with the housing (10), at least one latching lug (30a, 30b) latches into corrugations (14g) on the lateral surface region (14d) of the sensor carrier (14) on one of the housing sides (10a, 10b), a first pressing region (40a) being automatically brought into operative connection with the at least one latching lug (30a, 30b) during or at least after the assembly of the housing sides (10a, 10b) such that a radial adjustment of the latching lug (30a, 30b) latched in the corrugations (14g) is prevented relative to the corrugations (14g) in order to fix the adjusted angular position (200) of the sensor carrier (14) relative to the housing (10).

22. Method according to claim 21, wherein the at least one latching lug (30a, 30b), after the sensor carrier (14) is placed and before the two housing sides (10a, 10b) are assembled and connected,
- at least partly latches into the corrugations (14g) on the lateral surface region (14d) of the sensor carrier (14) and an adjustment of the latching lug (30a, 30b) in the radial direction (R) relative to the corrugations (14g) is possible, or
- does not latch into the corrugations (14g) on the lateral surface region (14d) of the sensor carrier (14) to adjust the angular position (200) of the sensor carrier (14) relative to the housing (10).

## Revendications

1. Module de capteur (20), comprenant :
un support de capteur (14) conçu pour la réception d'un capteur (12a, 12b) ; et
un boîtier (10) ; dans lequel
le boîtier (10) présente deux logements cylindriques coaxiaux (16a, 16b), dans
lesquels les extrémités cylindriques (18a, 18b) du support de capteur (14) sont montées de manière à pouvoir tourner autour d'un axe (A), dans lequel le module de capteur (20) est conçu pour fixer le support de capteur (14) dans une position angulaire (200) réglable par rapport au boîtier (10) par la production d'une liaison à force ou par complémentarité de forme (100a, 100b) entre le boîtier (10) et une zone de surface latérale (14d) du support de capteur (14), et dans lequel
le boîtier (10) présente un corps creux parallélépipédique (10d) en deux parties ou plus et comportant une ouverture continue (10e) formée sur trois côtés (10f-1, 10f-2, 10f-3) du corps creux parallélépipédique (10d) et avec laquelle une zone (14e) du support de capteur (14) s'étendant entre les extrémités (18a, 18b) du support de capteur (14) est exposée, dans lequel la zone (14e) exposée délimite une section cylindrique du support de capteur (14) dans la direction axiale (A), laquelle section cylindrique présente la zone de surface latérale (14d) pour la production de la liaison à force ou par complémentarité de forme (100a, 100b) avec le boîtier (10).

2. Module de capteur (20) selon la revendication 1, dans lequel le support de capteur (14) présente un contour cylindrique (300).

3. Module de capteur (20) selon la revendication 1 ou 2, **caractérisé en ce qu'**entre le boîtier (10) et la zone de surface latérale (14d) du support de capteur (14)
- à l'état non assemblé du module de capteur (20), aucune liaison à force ou par complémentarité de forme (100a, 100b) n'est réalisée pour permettre un réglage de la position angulaire (200) par rapport au boîtier (10), et
- à l'état assemblé du module de capteur (20), une liaison à force ou par complémentarité de forme (100a, 100b) est réalisée pour la fixation de la position angulaire (200) réglée par rapport au boîtier (10).

4. Module de capteur (20) selon l'une des revendications précédentes, dans lequel la zone de surface latérale (14d) est pourvue d'une cannelure (14g) pour la production de la liaison par complémentarité de forme (100b) avec le boîtier (10).

5. Module de capteur (20) selon la revendication 4, dans lequel au moins un ergot d'encliquetage (30a, 30b) disposé sur le boîtier (10), en particulier au moins un ergot d'encliquetage (30a, 30b) disposé sur l'un des côtés de boîtier (10a, 10b), s'encliquette dans la cannelure (14g) sur la zone de surface latérale (14d) du support de capteur (14) au moins à l'état assemblé du boîtier (10) et/ou du module de capteur (20), dans lequel un réglage de l'au moins un ergot d'encliquetage (30a, 30b) par rapport à la cannelure (14g) peut être empêché pour la production de la liaison par complémentarité de forme (100b) avec le boîtier (10) et pour ainsi empêcher une rotation du support de capteur (14) par rapport au boîtier (10).

6. Module de capteur (20) selon la revendication 5, dans lequel l'au moins un ergot d'encliquetage (30a, 30b) est disposé sur au moins une branche élastique (34) sur le boîtier (10), dans lequel l'au moins une branche (34) est mobile dans la direction radiale (R) par rapport au support de capteur (14) de telle sorte que l'au moins un ergot d'encliquetage (30a, 30b) s'appuie contre la cannelure (14g) au moins à l'état assemblé du boîtier (10) et/ou du module de capteur (20) et s'encliquette ainsi au moins partiellement dans la cannelure (14g).

7. Module de capteur (20) selon la revendication 6, dans lequel une première zone de pression (40a), à l'état assemblé du boîtier (10) et/ou du module de capteur (20), est amenée en liaison fonctionnelle avec l'au moins une branche (34) de telle sorte qu'un réglage de l'ergot d'encliquetage (30a, 30b) encliqueté dans la cannelure (14g) dans la direction radiale (R) par rapport à la cannelure (14g) est empêché pour la production de la liaison par complémentarité de forme (100b) avec le boîtier (10) et pour ainsi empêcher une rotation du support de capteur (14) par rapport au boîtier (10) à partir de la position angulaire (200) réglée.

8. Module de capteur (20) selon l'une des revendications 5 à 7, dans lequel l'au moins un ergot d'encliquetage (30a, 30b), à l'état non assemblé du boîtier (10) et/ou du module de capteur (20),
- s'encliquette au moins partiellement dans la cannelure (14g) sur la zone de surface latérale (14d) du support de capteur (14) et un réglage de l'ergot d'encliquetage (30a, 30b) dans la direction radiale (R) par rapport à la cannelure (14g) est permis ou
- ne s'encliquette pas dans la cannelure (14g) sur la zone de surface latérale (14d) du support de capteur (14), pour permettre une rotation du support de capteur (14) par rapport au
boîtier (10) pour le réglage de la position angulaire (200) par rapport au boîtier (10).

9. Module de capteur (20) selon la revendication 7 ou 8, dans lequel la première zone de pression (40a) est disposée sur l'un des côtés de boîtier (10a, 10b) du boîtier (10), dans lequel la première zone de pression (40a), à l'état assemblé du boîtier (10), repose sur la branche (34) de telle sorte qu'un réglage de l'ergot d'encliquetage (30a, 30b) encliqueté dans la cannelure (14g) dans la direction radiale (R) par rapport à la cannelure (14g) est empêché.

10. Module de capteur (20) selon la revendication 9, dans lequel les deux côtés de boîtier (10a, 10b) du boîtier (10) sont maintenus ensemble à l'état assemblé par une liaison par vissage ou par rivetage ou par serrage (50) pour la fixation de la liaison par complémentarité de forme (100b).

11. Module de capteur (20) selon l'une des revendications précédentes, comprenant en outre :
le capteur (12a, 12b), dans lequel le capteur (12a, 12b) est configuré pour détecter un rayonnement électromagnétique (400).

12. Module de capteur (20) selon l'une des revendications précédentes, dans lequel le support de capteur (14) est conçu pour la réception de deux capteurs (12a, 12b) identiques ou pour la réception de deux, trois ou quatre capteurs (12a, 12b) différents.

13. Module de capteur (20) selon l'une des revendications précédentes, dans lequel le support de capteur (14) est conçu pour la réception d'un dispositif permettant l'émission d'un rayonnement électromagnétique (1020).

14. Module de capteur (20) selon l'une des revendications précédentes, comprenant
en outre :
un circuit (500), dans lequel le circuit (500) est configuré pour recevoir des signaux de mesure (600) du capteur (12a, 12b) et pour transmettre des données de mesure (700) produites à partir des signaux de mesure (600) à un récepteur (800) en tenant compte d'un protocole de transmission.

15. Véhicule (900) comportant un module de capteur (20) selon l'une des revendications précédentes, dans lequel le module de capteur (20) est configuré pour le traitement et/ou la sortie de données d'environnement (2000).

16. Véhicule (900) selon la revendication 15, dans lequel le capteur (12a, 12b) est conçu en tant que capteur radar (1010), infrarouge (1040) ou d'image (12a, 12b).

17. Véhicule (900) selon la revendication 15 ou 16, dans lequel le module de capteur (20) est monté derrière un pare-brise (22) du véhicule (900) et l'axe (A) est orienté dans la direction horizontale (H).

18. Véhicule (900) selon la revendication 15 ou 16, dans lequel le module de capteur (20) est monté derrière une vitre latérale (920) du véhicule (900) et l'axe (A) est orienté dans la direction verticale (V).

19. Véhicule (900) selon la revendication 15 ou 16, dans lequel le module de capteur (20) est monté dans un boîtier de rétroviseur latéral (910) du véhicule (900).

20. Véhicule (900) selon l'une des revendications 15 à 19, dans lequel la position angulaire (200) est réglable dans une plage de 150° à 200°, de préférence à 180°.

21. Procédé permettant l'assemblage d'un module de capteur (20) selon l'une des revendications précédentes, comportant au moins les étapes suivantes :
- fourniture des côtés de boîtier (10a, 10b) du boîtier (10) et du support de capteur (14) ;
- placement du support de capteur (10a, 10b) dans l'un des côtés de boîtier (10a, 10b) ;
- rotation du support de capteur (14) placé autour de l'axe de rotation (A) pour le réglage d'une position angulaire (200) ;
- assemblage et liaison des deux côtés de boîtier (10a, 10b) pour la formation du boîtier (10), dans lequel, au moins après l'assemblage et la liaison des côtés de boîtier (10a, 10b), une liaison à force ou par complémentarité de forme (100a, 100b) entre le boîtier (10) et la zone de surface latérale (14d) du support de capteur (14) est produite pour fixer le support de capteur (14) dans la position angulaire (200) réglée par rapport au boîtier (10), **caractérisé par** les étapes,
dans lequel, pour la production de la liaison par complémentarité de forme (100b) avec le boîtier (10), au moins un ergot d'encliquetage (30a, 30b) s'encliquette dans une cannelure (14g) sur la zone de surface latérale (14d) du support de capteur (14) sur l'un des côtés de boîtier (10a, 10b), dans lequel une première zone de pression (40a), lors de ou au moins après l'assemblage des côtés de boîtier (10a, 10b), est automatiquement amenée en liaison fonctionnelle avec l'au moins un ergot d'encliquetage (30a, 30b) de telle sorte qu'un réglage radial de l'ergot d'encliquetage (30a, 30b) encliqueté dans la cannelure (14g) par rapport à la cannelure (14g) est empêché pour la fixation de la position angulaire (200) réglée du support de capteur (14) par rapport au boîtier (10).

22. Procédé selon la revendication 21, dans lequel l'au moins un ergot d'encliquetage (30a, 30b), après le placement du support de capteur (14) et avant l'assemblage et la liaison des deux côtés de boîtier (10a, 10b),
- s'encliquette au moins partiellement dans la cannelure (14g) sur la zone de surface latérale (14d) du support de capteur (14) et un réglage de l'ergot d'encliquetage (30a, 30b) dans la direction radiale (R) par rapport à la cannelure (14g) est permis, ou
- ne s'encliquette pas dans la cannelure (14g) sur la zone de surface latérale (14d) du support de capteur (14), pour le réglage de la position angulaire (200) du support de capteur (14) par rapport au boîtier (10).
